# EUROPEAN PATENT APPLICATION

(11) **EP 3 130 899 A1**
(43) Date of publication of application: **15.02.2017**
(21) Application number: 15777395.3
(22) Date of filing: 30.03.2015
(51) Int. Cl.: G01L 1/22

(54) **STRAIN SENSOR AND LOAD DETECTOR USING SAME**

(30) Priority: 08.04.2014 JP 2014079120; 05.11.2014 JP 2014224818; 05.11.2014 JP 2014224819
(71) Applicant: Panasonic Intellectual Property Management Co., Ltd., Osaka-shi, Osaka 570-6207 (JP)
(72) Inventor: OGAWA, Takaaki, Osaka-shi, Osaka 540-6207 (JP); NOMURA, Kazuhiro, Osaka-shi, Osaka 540-6207 (JP); OBAYASHI, Masahiko, Osaka-shi, Osaka 540-6207 (JP); TAKEKAWA, Atsuo, Osaka-shi, Osaka 540-6207 (JP); ABURATA, Kouichi, Osaka-shi, Osaka 540-6207 (JP); NABETANI, Kouji, Osaka-shi, Osaka 540-6207 (JP); NAKASHIMA, Koichiro, Osaka-shi, Osaka 540-6207 (JP); MOTOFUSA, Toshiharu, Osaka-shi, Osaka 540-6207 (JP); ODA, Shinpei, Osaka-shi, Osaka 540-6207 (JP)
(74) Representative: Grünecker Patent- und Rechtsanwälte PartG mbB
(86) International application number: PCT/JP2015/001820
(87) International publication number: WO 2015/155956

(57) **Abstract**

A strain sensor includes a cylindrical strain body extending in an axial direction, a first fixed part, a second fixed part, and a strain detection element. The first fixed part is connected to the strain body at a first connection part and extends from an opening of a first end of the strain body in the axial direction. The second fixed part is connected to the strain body at a second connection part and extends from an opening of a second end of the strain body in a direction opposite to the first fixed part with a gap interposed between the strain body and the second fixed part. The strain detection element is disposed such that a center of the strain detection element is closer to the second fixed part than a center of the gap in the axial direction.

## Description

### TECHNICAL FIELD

The present invention relates to a strain sensor which detects magnitude of load by measuring strain generated in a strain body when the load is applied to the strain body, and a load detector using the strain sensor.

### BACKGROUND ART

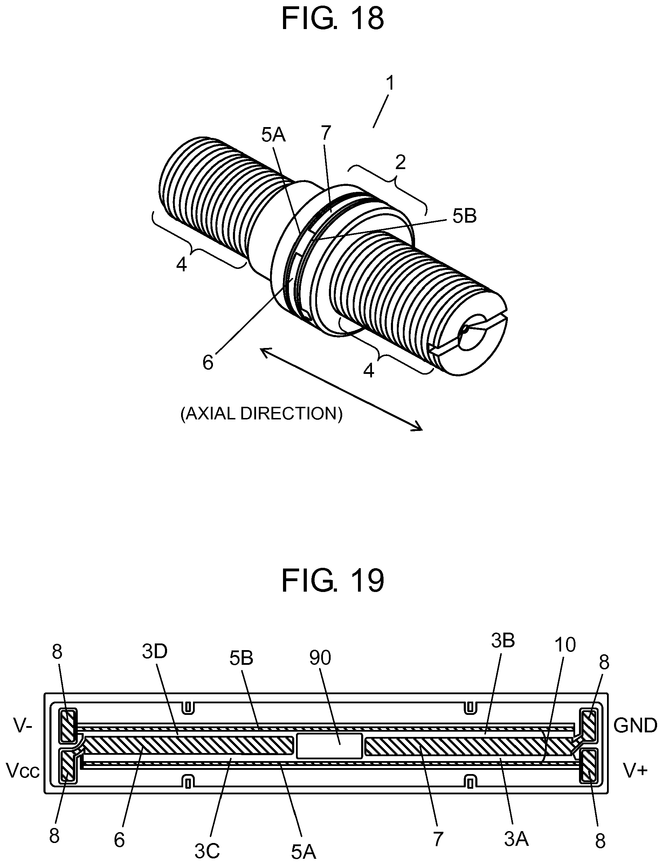

Conventionally, in order to measure magnitude of load, a strain sensor which measures the magnitude of the load by detecting strain generated in a strain body is used. FIG. 18 is a perspective view of conventional strain sensor 1. FIG. 19 is an enlarged view of an outer peripheral surface of strain body 2 of strain sensor 1.

Strain sensor 1 includes strain body 2, and first to fourth resistance elements (hereinafter referred to as resistance element) 3A, 3B, 3C, 3D. Strain body 2 generates stain based on load. Resistance elements 3A, 3B, 3C, 3D are disposed on the outer peripheral surface of strain body 2. Each resistance of resistance elements 3A, 3B, 3C, 3D is changed in accordance with an amount of the strain. A signal processing circuit (not shown) which detects the amount of the strain of strain body 2 is connected to resistance elements 3A, 3B, 3C, 3D. Strain body 2 is formed in a cylindrical shape with a hollow part (not shown) therein along an axial direction, and screw parts 4 are disposed in the axial direction of strain body 2 so that strain body 2 is interposed therebetween. Further, strain body 2 and screw parts 4 are joined integrally by welding.

First output electrode (hereinafter referred to as output electrode) 5A and second output electrode (hereinafter referred to as output electrode) 5B facing each other are disposed on a peripheral surface of strain body 2. Power source electrode 6 and ground electrode 7 are provided between output electrodes 5A, 5B. These electrodes are connected to pad electrodes 8, respectively. Each of output electrodes 5A, 5B, power source electrode 6, and ground electrode 7 is formed of an Ag electrode in which silver is baked and formed into a linear shape. Output electrodes 5A, 5B face each other in the axial direction of strain body 2. Power source electrode 6 and ground electrode 7 are disposed substantially on the same line. Further, power source electrode 6 and ground electrode 7 are disposed substantially parallel to output electrodes 5A, 5B.

Resistance element 3A is formed to connect ground electrode 7 and output electrode 5A, and resistance element 3B is formed to connect ground electrode 7 and output electrode 5B. Resistance element 3C is formed to connect power source electrode 6 and output electrode 5A, and resistance element 3D is formed to connect power source electrode 6 and output electrode 5B. Resistance elements 3A, 3B, 3C, 3D are formed by covering, with a strain resistance body, portion 10 between output electrode 5A and output electrode 5B facing each other, output electrodes 5A, 5B, power source electrode 6, and ground electrode 7, except for part 90 where both of power electrode 6 and ground electrode 7 face (for example, see PTL 1).

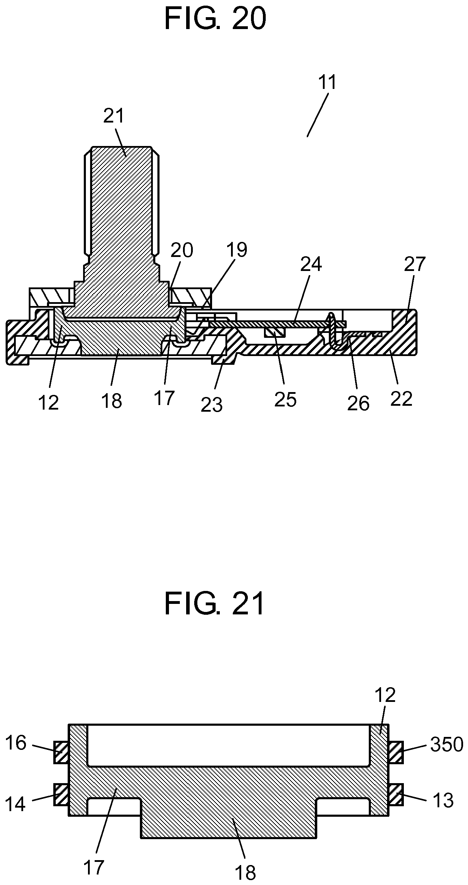

FIG. 20 is a cross-sectional view of another conventional strain sensor 11. FIG. 21 is an enlarged view of a part of strain sensor 11. Strain sensor 11 has strain body 12 formed in a cylindrical shape by precipitation hardening stainless steel. A power source electrode, a first output electrode, a second output electrode, and a ground electrode (GND) (all of which are not shown) formed of Ag are provided on an outer surface of strain body 12 so as to be positioned close to each other.

As shown in FIG. 21, first lower strain detection element (hereinafter referred to as detection element) 13 electrically connected to the power source electrode is provided on the outer surface at a lower side of strain body 12. Second lower strain detection element (hereinafter referred to as detection element) 14 electrically connected to the second output electrode is provided at a side opposite to detection element 13. First upper strain detection element (hereinafter referred to as detection element) 350 electrically connected to detection element 13 and the first output element is provided on the outer surface at an upper side of the strain body 12 and at an upper side of detection element 13. Further, second upper strain detection element (hereinafter referred to as detection element) 16 electrically connected to detection element 14 and the second output electrode is provided on the outer surface at the upper side of the strain body 12 and at a side opposite to first upper strain detection element 350. Detection elements 13, 14, 350, 16 constitute a bridge circuit.

Further, extension part 17 is provided at an inner side of cylindrical strain body 12, and column part 18 is provided at a distal end side of extension part 17. An upper mounting part (not shown) is provided at an upper end of strain body 12 via gap 19. A lower mounting part (not shown) supports column part 18 provided at a distal end of extension part 17 in strain body 12. Further, the upper mounting part and the lower mounting part constitute a support member (not shown). Metal pressing member 21 formed by a shaft is fixed to an inner surface of strain body 12 at an upper end side and is movable in a longitudinal direction of strain body 12. Gap 20 is formed between the upper mounting part and pressing member 21, and the upper mounting part serves as a stopper. Resin case 22 has caulking part 23. By caulking a distal end of caulking part 23, the lower mounting part of the support member is fixed to case 22.

Further, circuit substrate 24 formed of glass epoxy is provided in case 22, and circuit substrate 24 is electrically connected to the power source electrode, the first output electrode, the second output electrode, and the GND electrode of strain body 12. Further, processing circuit 25 formed by an integrated circuit (IC) is provided on circuit substrate 24. Processing circuit 25 processes an output signal of the bridge circuit configured by first lower strain detection element 13, second lower strain detection element 14, first upper strain detection element 350, second upper strain detection element 16 in strain body 12, and circuit pattern 18. Further, connector part 27 having connector terminal 26 is provided in case 22. Connector terminal 26 is electrically connected to circuit substrate 24, and is configured to output the output signal to an outside (for example, see PTL 2).

### Citation List

### Patent Literatures

- PTL 1:: Japanese Patent No. 4,760,485
- PTL 2:: Unexamined Japanese Patent Publication No. 2013-061217

### SUMMARY OF THE INVENTION

The present invention provides a strain sensor which generates a large output signal, and improves detection accuracy of strain by reducing an influence of axial force on the strain sensor.

The strain sensor according to the present invention includes a cylindrical strain body extending in an axial direction, a first fixed part, a second fixed part, and a strain detection element. The first fixed part is connected to the strain body at a first connection part and extends from an opening of a first end of the strain body in the axial direction. Further, the first fixed part has a first engagement part to be fixed to an object to be detected. The second fixed part is connected to the strain body at a second connection part and extends from an opening of a second end of the strain body in a direction opposite to the first fixed part with a gap interposed between the strain body and the second fixed part. Further, the second fixed part has a second engagement part to be fixed to the object to be detected. The strain detection element is provided on an outer peripheral surface of the strain body. The strain detection element is disposed such that a center of the strain detection element is closer to the second fixed part than a center of the gap in the axial direction.

With a configuration described above, axial force can be reduced when the strain sensor is mounted to the object to be detected, and detection accuracy of the strain sensor can be improved.

### BRIEF DESCRIPTION OF DRAWINGS

FIG.1 is a cross-sectional view of a strain sensor according to a first exemplary embodiment of the present invention.
FIG. 2 is a developed view of an outer peripheral surface of a strain body of the strain sensor shown in FIG. 1.
FIG. 3 is a circuit diagram of a strain detection element provided in the strain body shown in FIG. 2.
FIG. 4 is an enlarged view of a part of the strain sensor in which the strain sensor shown in FIG. 1 is deformed.
FIG. 5 shows distribution of magnitude of strain generated in the strain sensor shown in FIG. 1 by axial force.
FIG. 6 is a cross-sectional view of a strain sensor according to a second exemplary embodiment of the present invention.
FIG. 7 is an enlarged view of a part of the strain sensor in which the strain sensor shown in FIG. 6 is deformed.
FIG. 8 shows a configuration of a load detector including the strain sensor shown in FIG. 6.
FIG. 9 is a cross-sectional view of a part of the load detector shown in FIG. 8.
FIG. 10 shows change in magnitude of strain generated in a strain sensor generated by axial force due to change in dimension of a receiving part of the strain sensor shown in FIG. 6.
FIG. 11 is a cross-sectional view of the load detector including another strain sensor according to the second exemplary embodiment of the present invention.
FIG. 12 is a cross- sectional view of a strain sensor according to a third exemplary embodiment of the present invention.
FIG. 13 is an enlarged view of a part of the strain sensor in which the strain sensor shown in FIG. 12 is deformed.
FIG. 14 shows a configuration of a load detector including the strain sensor shown in FIG. 12.
FIG. 15 is a cross-sectional view of a part of the load detector shown in FIG. 14.
FIG. 16 is a cross-sectional view of another strain sensor according to the third exemplary embodiment of the present invention.
FIG. 17 is a cross-sectional view of still another strain sensor according to the third exemplary embodiment of the present invention.
FIG. 18 is a perspective view of a conventional strain sensor.
FIG. 19 is an enlarged view of a part of the strain sensor shown in FIG. 18.
FIG. 20 is a side cross-sectional view of another conventional strain sensor.
FIG. 21 is an enlarged view of a part of the strain sensor shown in FIG. 20.

### DESCRIPTION OF EMBODIMENTS

Prior to description of exemplary embodiments of the present invention, a problem of a conventional strain sensor is briefly described. In the strain sensor disclosed in PTL 1, an output signal is small. In the strain sensor disclosed in PTL 2, detection accuracy is deteriorated due to influence of axial force generated when the strain sensor is mounted to an object to be detected.

Hereinafter, strain sensors according to various exemplary embodiments of the present invention are described with reference to drawings. Note that, in second and third exemplary embodiments, the same reference numerals are assigned to elements having similar configurations to those in aforementioned exemplary embodiment(s), and detailed description thereof may be therefore omitted. Further, a specific configuration in each exemplary embodiment may be combined with a configuration in other exemplary embodiment within a scope of the present invention.

### FIRST EXEMPLARY EMBODIMENT

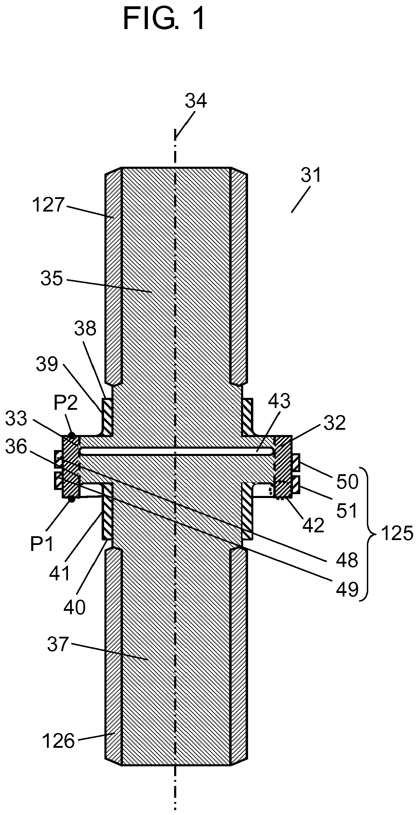

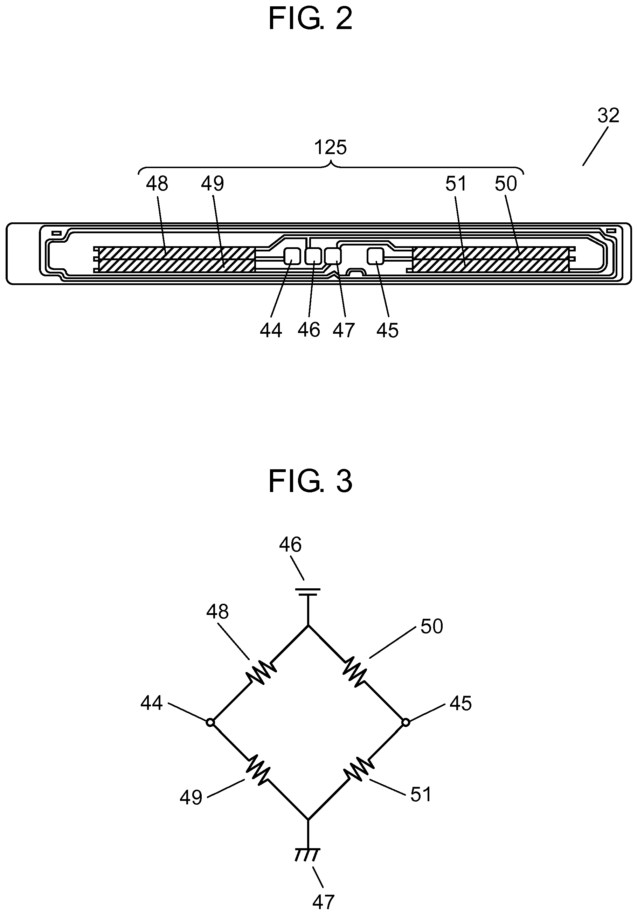

FIG. 1 is a side cross-sectional view of strain sensor 31 according to a first exemplary embodiment of the present invention. FIG. 2 is a developed view of an outer peripheral surface of strain body 32 of strain sensor 31.

Strain sensor 31 includes cylindrical strain body 32 extending along a direction of axis 34, first fixed part 35, second fixed part 37, and strain detection element 125. First fixed part 35 is connected to an inside of strain body 32 at first connection part 33 and extends from an opening of a first end of strain body 32 in the direction of axis 34. Further, first fixed part 35 has first engagement part 127 to be fixed to an object to be detected (not shown). Second fixed part 37 is connected to an inside of strain body 32 at second connection part 36 and extends from an opening of a second end of strain body 32 in a direction opposite to first fixed part 35 with a gap 43 interposed between strain body 32 and second fixed part 37. Further, second fixed part 37 has second engagement part 126 to be fixed to the object to be detected. Strain detection element 125 is provided on an outer peripheral surface of strain body 32.

Each of first engagement part 127 and second engagement part 126 is formed by a screw. Strain sensor 31 is fixed to the object to be detected by screwing first engagement part 127 and second engagement part 126 to the object to be detected in a state where washers (not shown) are in contact with first surface 38 and second surface 40, respectively.

It is preferable that extension part 42 extends from second connection part 36 in the same direction in which second fixed part 37 extends. This configuration is described below.

First fixed part 35 has first thick part 39 protruding in a direction orthogonal to the direction of axis 34, and second fixed part 37 has second thick part 41 protruding in the direction orthogonal to the direction of axis 34. First thick part 39 has first surface 38 orthogonal to the direction of axis 34 and close to first engagement part 127, and second thick part 41 has second surface 40 orthogonal to the direction of axis 34 and close to second engagement part 126.

Further, strain detection element 125 is disposed at a position closer to second fixed part 37 than a center of gap 43 in the direction of axis 34. That is, strain detection element 125 is disposed such that a center of strain detection element 125 is closer to second fixed part 37 than the center of gap 43 in the direction of axis 34.

As shown in FIG. 2, a circuit pattern including first output electrode 44, second output electrode 45, power source electrode 46, and ground electrode 47 is provided on the outer peripheral surface of strain body 32. Strain detection element 125 is configured by first strain resistance pattern 48, second strain resistance pattern 49, third strain resistance pattern 50, and fourth strain resistance pattern 51. Hereinafter, first to fourth strain resistance patterns 48 to 51 are referred to as patterns 48 to 51.

Pattern 48 is connected to between power source electrode 46 and first output electrode 44, and pattern 49 is connected to between ground electrode 47 and first output electrode 44. Pattern 50 is connected to between power source electrode 46 and second output electrode 45, and pattern 51 is connected to between ground electrode 47 and second output electrode 45. Pattern 48 and pattern 50 are disposed closer to first fixed part 35 than pattern 49 and pattern 51. Strain detection element 125 and the circuit pattern state where a full bridge circuit shown in FIG. 3.

Strain body 32 is formed of metal such as stainless. Firstly, glass paste is printed on the outer peripheral surface of strain body 32, and by baking strain body 32 at around 550°C for approximately 10 minutes, insulating film (not shown) is formed. Next, silver paste is printed on the insulating film, and by baking strain body 32 at approximately 550°C for approximately 10 minutes, the circuit pattern is formed. Thereafter, resistance paste is printed on the insulating film, and by baking strain body 32 at around 550°C for approximately 10 minutes, patterns 48 to 50 are formed. First fixed part 35 and second fixed part 37 may be joined integrally with cylindrical strain body 32 by welding, or alternatively may be formed by processing a member made of the same material.

Further, in the present exemplary embodiment, strain-resistance type strain sensor 31, which detects an amount of strain of strain body 32 by change in resistance, is described as one example. However, the strain sensor in which frequency or static capacitance is changed in accordance with the amount of strain may be adopted. This configuration may be similarly adopted in the second and third exemplary embodiments.

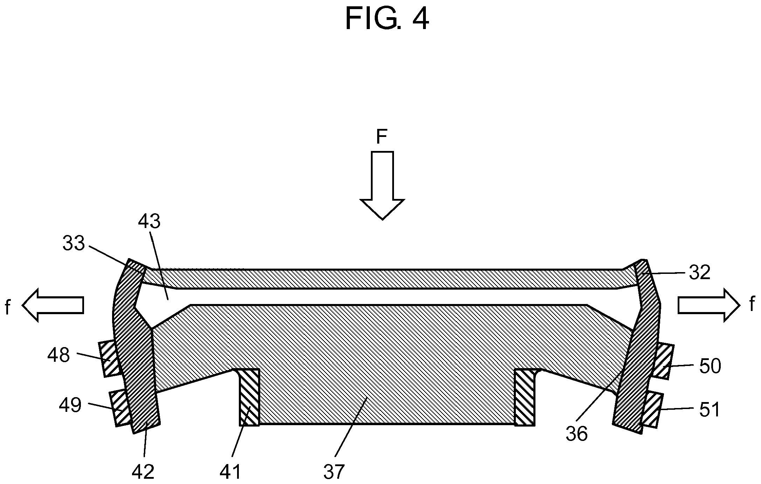

Hereinafter, operation of strain sensor 31 is described. FIG. 4 is an enlarged view of a part of strain sensor 31 showing deformation of strain sensor 31 when load is applied to strain body 32. The load pushing strain body 32 in the direction of axis 34 is applied to strain sensor 31 connected to the object to be detected via first fixed part 35 or second fixed part 37. Strain body 32 is deformed by this load.

When load F is applied to strain body 32 from the object to be detected via first fixed part 35 or second fixed part 37, shearing load f is applied to second fixed part 37. A moment is generated on an outer surface of strain body 32 due to shearing load f, and tension stress is applied to strain body 32 between first connection part 33 and second connection part 36. As a result, strain body 32 is deformed such that a portion between first connection part 33 and second connection part 36 is displaced toward an outside, and extension part 42 is deformed to be displaced toward an inside.

As strain body 32 is deformed in this way, compression stress is applied to patterns 48, 50, and tension stress is applied to patterns 49, 51. With such stresses, each resistance of patterns 48, 50 becomes larger, and each resistance of patterns 49, 51 becomes smaller. With this, a potential difference is generated between first output electrode 44 and second output electrode 45. By subjecting the potential difference to signal processing, the processing circuit can generate an output signal corresponding to detection load.

As described above, by detecting strain generated in strain body 32 when load F is applied to strain body 32, magnitude of load F can be measured. However, strain body 32 is also deformed when strain sensor 31 is mounted to the object to be detected by means of first fixed part 35 and second fixed part 37 via the washer. At this time, tension force is applied to strain body 32 from first fixed part 35 and second fixed part 37 in an opposite direction along the direction of axis 34. That is, tension force (hereinafter referred to as axial force) is applied to strain body 32 in a vertical direction in FIG. 4.

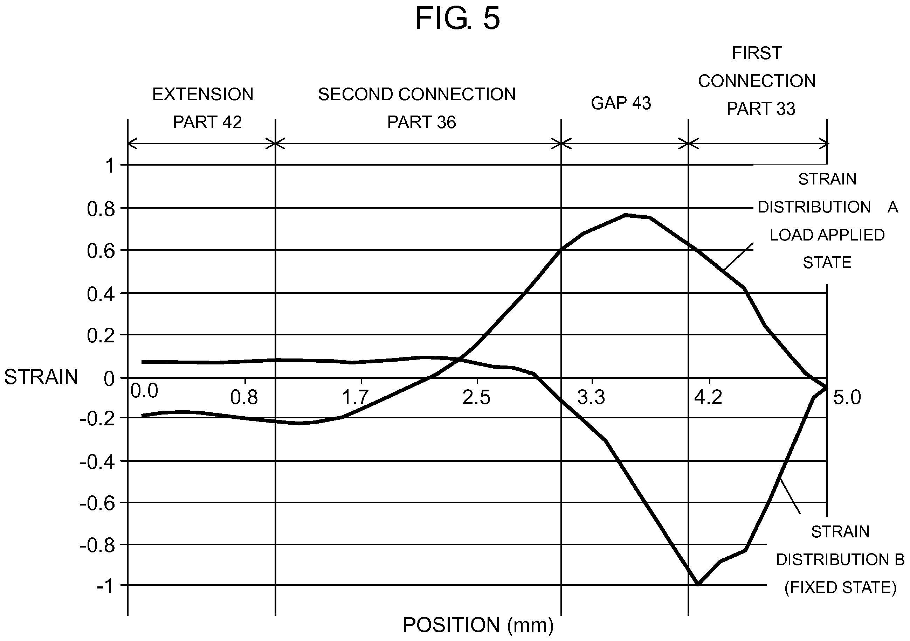

FIG. 5 shows distribution of magnitude of strain generated in strain body 32 when strain body 32 is deformed as shown in FIG. 4, and distribution of magnitude of strain generated in strain sensor 31 by the axial force when strain sensor 31 is mounted to the object to be detected. A horizontal axis in FIG. 5 indicates a position in strain body 32 in the direction of axis 34 of strain body 32 with a distal end of extension part 42 being set to 0.0 mm. A vertical axis indicates the magnitude of the strain generated on the outer peripheral surface of strain body 32 with a value of the magnitude of the strain at a position (approximately 4.1 mm) where the absolute value of the magnitude of the strain becomes maximum being normalized to a reference value of 1. Further, in the vertical axis, + side indicates the tension stress, and - side indicates the compression stress.

Data shown in FIG. 5 corresponds to a detection result in which strain body 32 having a length of 5.0 mm between distal end P1 of extension part 42 shown in FIG. 1 and end part P2 close to first fixed part 35 is used. Position 5.0 indicates end part P2. Further, in FIG. 5, the distribution of the strain when load of 1 kN is applied from first fixed part 35 in the direction of axis 34 is depicted as strain distribution A, and the distribution of the strain generated in strain body 32 by the axial force when the strain sensor 31 is fixed to the object to be detected via the washers by force of 10 kN is depicted as strain distribution B.

First connection part 33 has a length of 1.2 mm, second connection part 36 has a length of 2.0 mm, and extension part 42 has a length of 1.0 mm. Thus, a portion between 0.0 mm and 1.0 mm corresponds to extension part 42, a portion between 1.0 mm and 3.0 mm corresponds to second connection part 36, a portion between 3.0 mm and 3.8 mm corresponds to gap 43, and a portion between 3.8 mm and 5.0 mm corresponds to first connection part 33. Each of a center part of pattern 48 and pattern 50 in the direction of axis 34 is located at a position of 2.6 mm in FIG. 5, and each of a center part of pattern 49 and pattern 51 in the direction of axis 34 is located at a position of 1.6 mm.

When strain sensor 31 is fixed to the object to be detected by load of 10 kN, the strain having magnitude of -1 is generated at a position of 4.2 mm by the axial force. On the other hand, when compression load of 1 kN is applied to strain sensor 31, the strain having magnitude of approximately 0.78 is generated in strain body 32. Thus, it is found that strain equal to or larger than that generated when compression load of 1 kN is applied to strain sensor 31 by influence of the axial force is generated in strain body 32. Accordingly, in a case where strain detection element 125 is provided at a position where the influence of the axial force is large, detection accuracy of compression load applied to strain sensor 31 is deteriorated because of the large influence of the axial force.

In a case where strain sensor 31 is fixed to the object to be detected by using the washer, strain sensor 31 is fastened by the washer such that the washer is in contact with first surface 38 and second surface 40. Accordingly, tensional axial force is applied to strain body 32 in the direction of axis 34 from first surface 38 and second surface 40. At this time, axial force applied to strain body 32 becomes larger as the applied position is closer to first surface 38 and second surface 40, and strain body 32 is distorted remarkably. Further, since a thickness in a direction orthogonal to axis 34 of a portion where gap 43 is formed is thinner compared to first connection part 33 and second connection part 36, strain body 32 is likely to be distorted at the portion where gap 43 is formed.

Accordingly, as shown in strain distribution B in FIG. 5, the influence (strain) of the axial force generated, when strain sensor 31 is mounted to the object to be detected, becomes maximum at an end part (position of 4.1 mm), which is close to gap 43, of first connection part 33. Further, strain becomes less than a half (approximately -0.4) at an intermediate point (position of 3.4 mm) between first connection part 33 and second connection part 36, and the influence of the axial force is reduced as the position is closer to second connection part 36, and strain becomes 0 at an end part (position of 3.0 mm), which is close to gap 43, of second connection part 36.

As described above, strain distribution A indicates the strain generated in strain body 32 by applying compression load F from first fixed part 35 in the direction of axis 34 after strain sensor 31 is mounted to the object to be detected. In gap 43 between first connection part 33 and second connection part 36, strain becomes minimum at the end part (position of 3.0 mm) close to first connection part 33. The magnitude of the strain at this position is approximately 0.6 and it is sufficiently larger than the strain generated by the axial force. That is, the influence of the axial force can be reduced and the strain generated by load can be detected with high sensitivity at a position close to the end part, which is close to first connection part 33, of gap 43. Accordingly, it is preferable that strain detection element 125 is provided at a position closer to second connection part 36 than the intermediate point (3.4 mm) between first connection part 33 and second connection part 36. That is, it is preferable that strain detection element 125 is disposed such that a center of strain detection element 125 is closer to second fixed part 37 than a center of gap 43 in the direction of axis 34. With this, since the influence of the axial force can be reduced and large strain can be detected when the compression load is applied, the detection accuracy of strain sensor 31 can be improved.

Further, by providing strain detection element 125 such that the center of strain detection element 125 is close to an end part (position of 2.9 mm) near gap 43 in the direction of axis 34 in second connection part 36, the influence of the axial force can be set to 0 and the detection accuracy of strain sensor 31 can be improved.

Further, it is preferable that patterns 48, 50 of strain detection element 125 are provided at a position (position of 2.9 mm) where the axial force is to be 0 in second connection part 36, and that patterns 49, 51 are provided at a position (position of 1.0 mm to 1.3 mm) close to extension part 42 of second connection part 36, That is, provided at a side opposite to gap 43. Alternatively, patterns 49, 51 may be provided on extension part 42 (position of 0.0 mm to 1.0 mm). With such an arrangement, tension stress is applied to patterns 48, 50 and compression stress is applied to patterns 49, 51. Thus, a large detection signal can be generated and the detection sensitivity of strain sensor 31 can be improved.

Further, with reference to FIG. 5, the absolute value of the strain generated when the compression stress is applied becomes maximum (minimum at minus side) at a position (position of 1.2 mm) close to extension part 42 of second connection part 36. Thus, by providing patterns 49, 51 at this position (position of 1.2 mm), the detection sensitivity of strain sensor 31 can be improved.

When the object to be detected is fastened to first engagement part 127, further fastening is not performed after the object to be detected is brought into contact with first surface 38. Similarly, when the object to be detected is fastened to second engagement part 126, further fastening is not performed after the object to be detected is brought into contact with second surface 40. Accordingly, first surface 38 and second surface 40 serve as a first receiving surface and a second receiving surface, respectively, when the object to be detected is fastened. In this way, by providing first thick part 39 and second thick part 41, when the object to be detected is fastened and the strain is generated in strain body 32, a distance in the direction of axis 34 between the object to be detected and strain body 32 can be ensured. As a result, the strain can be reduced. Note that first thick part 39 and second thick part 41 may be provided on the whole or a part of the outer peripheral surface of first fixed part 35 and second fixed part 37.

In this way, by providing strain detection element 125 at a position where the influence of the axial force generated when strain sensor 31 is mounted to the object to be detected is small, the detection accuracy of strain sensor 31 can be improved.

Further, in the description described above, although the full bridge circuit including pattern 48, pattern 49, pattern 50, and pattern 51 is provided as strain detection element 125, the present invention is not limited thereto. Any detection element can be adopted as long as the strain generated in strain body 32 can be detected by detecting change in resistance. That is, patterns 48 to 51 are one example of the first to fourth strain detection elements. This configuration is adopted to the second and third exemplary embodiments described below.

### SECOND EXEMPLARY EMBODIMENT

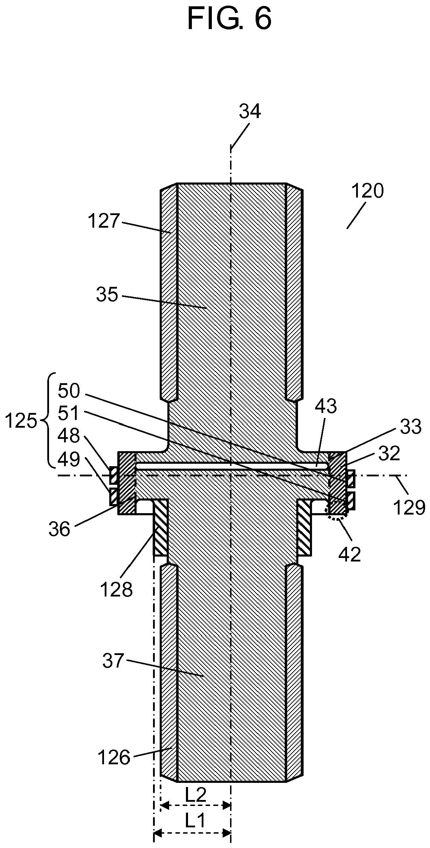

FIG. 6 is a side cross-sectional view of strain sensor 120 according to a second exemplary embodiment of the present invention. Strain sensor 120 includes strain body 32, first fixed part 35, second fixed part 37, and strain detection element 125. First fixed part 35 is connected to an inside of strain body 32 at first connection part 33 and extends from an opening of a first end of strain body 32 in the direction of axis 34. Second fixed part 37 is connected to an inside of strain body 32 at second connection part 36 and extends from an opening of a second end of strain body 32 in a direction opposite to first fixed part 35 with a gap 43 interposed between strain body 32 and second fixed part 37. That is, first fixed part 35 is joined so as to fill the opening of the first end of strain body 32, and second fixed part 37 is joined so as to fill the opening of the second end. Gap 43 is formed between first fixed part 35 and second fixed part 37. Further, first fixed part 35 has first engagement part 127 to be fixed to an object to be detected (not shown), and second fixed part 37 has second engagement part 126 to be fixed to the object to be detected. Strain detection element 125 is provided on an outer peripheral surface of strain body 32. A configuration described above is similar to that of strain sensor 31 according to the first exemplary embodiment. In strain sensor 120, receiving part 128 is provided between second engagement part 126 and second connection part 36 to be connected to strain body 32 in second fixed part 37 instead of first thick part 39 and second thick part 41, and this configuration is different from strain sensor 31.

Receiving part 128 is provided over the whole of an outer peripheral surface of second fixed part 37 between an end part, which is close to strain body 32, of second engagement part 126 and strain body 32. Length L1 of receiving part 128 in radial direction 129 is larger than length L2 of second fixed part 37 in radial direction 129.

When strain sensor 120 is mounted to the object to be detected, a mounting hole (not shown) for mounting strain sensor 120 is formed in the object to be detected and second engagement part 126 is fixed to the mounting hole by a screw. In mounting, since length L1 is larger than length L2, strain sensor 120 can be mounted to the object to be detected without strain body 32 being brought into contact with the object to be detected. That is, a similar effect to second thick part 41 in the first exemplary embodiment can be obtained by receiving part 128.

A configuration of strain detection element 125 has been described with reference to FIGS. 2 and 3 in the first exemplary embodiment, and a description thereof is therefore omitted. Further, the same configuration as that in the first exemplary embodiment can be formed in a similar way.

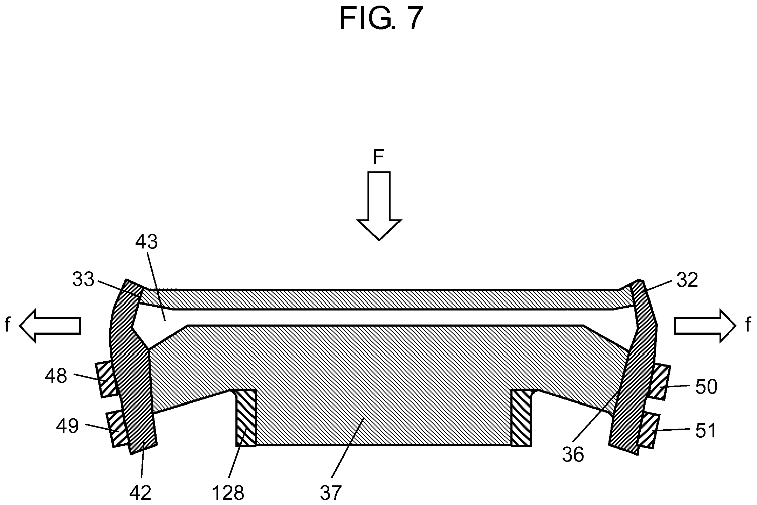

Hereinafter, operation of strain sensor 120 is described. FIG. 7 is an enlarged view of a part of strain sensor 120 in which strain sensor 120 is deformed when load (for example, tread force) as input load is transmitted to strain body 32 of strain sensor 120.

Load pushing strain body 32 in the direction of axis 34 is applied to strain sensor 120 connected to the object to be detected via first fixed part 35 or second fixed part 37. Strain body 32 is deformed by this load.

When load F is applied to strain body 32 from the object to be detected via first fixed part 35 or second fixed part 37, shearing load f is applied to first fixed part 35. A moment is generated on an outer surface of strain body 32 due to shearing load f, and tension stress is applied to strain body 32 between first connection part 33 and second connection part 36. Strain body 32 is deformed such that a portion between first connection part 33 and second connection part 36 is displaced toward an outside, and extension part 42 is deformed to be displaced toward an inside. Extension part 42, similar to that in the first exemplary embodiment, extends from strain body 32 toward second fixed part 37 to be parallel to the direction of axis 34.

As strain body 32 is deformed in this way, when the load is applied to second fixed part 37, compression stress is applied to first strain resistance pattern 48 and third strain resistance pattern 50, and tension stress is applied to second strain resistance pattern 49 and fourth strain resistance pattern 51. When the stress is applied, each resistance of first strain resistance pattern 48 and third strain resistance pattern 50 becomes larger, and each resistance of second strain resistance pattern 49 and fourth strain resistance pattern 51 becomes smaller. With this, a potential difference is generated between first output electrode 44 and second output electrode 45 shown in FIGS. 2 and 3, and by subjecting the potential difference to signal processing in the processing circuit, an output signal corresponding to detection load can be generated. That is, an operation principle of strain sensor 120 is similar to that of strain sensor 31.

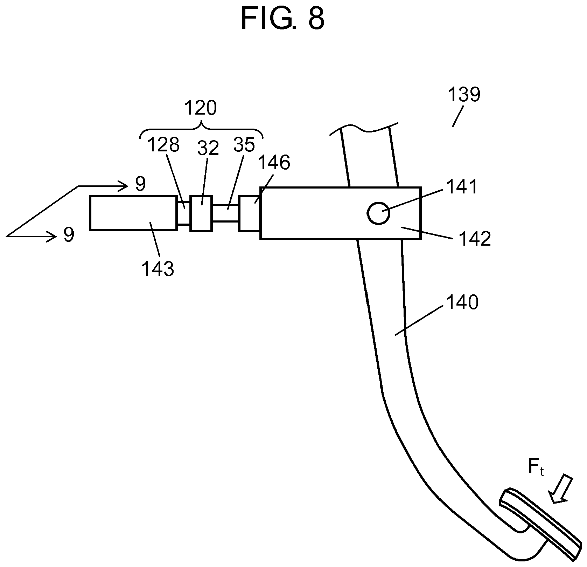

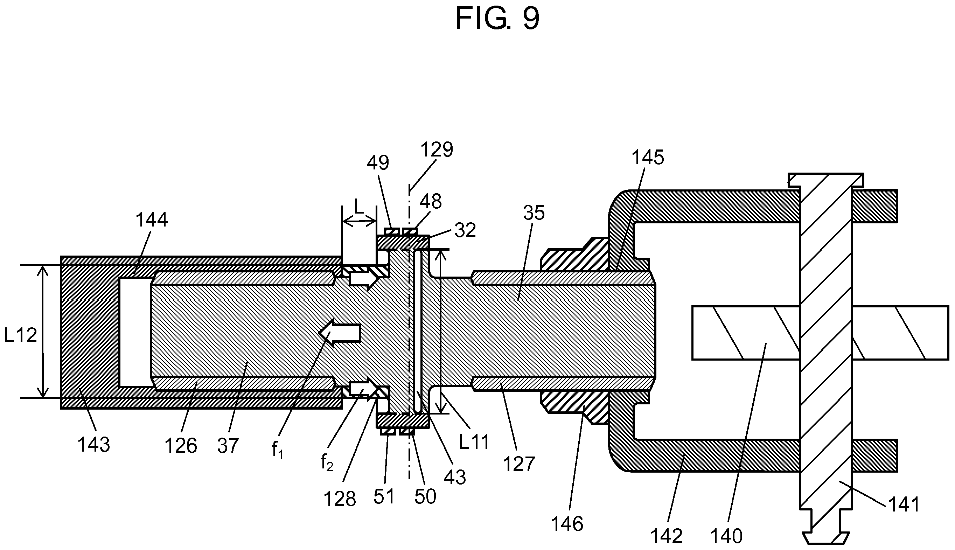

Next, an effect to reduce transmission of the axial force to strain body 32 by means of receiving part 128 is described by using vehicle load detector 139 including strain sensor 120. FIG. 8 shows a configuration of load detector 139. FIG. 9 is a cross-sectional view of load detector 139 taken along line 9-9.

Load detector 139 includes pedal arm 140, clevis pin 141, clevis 142, strain sensor 120, and operating rod 143. Tread load as an example of load input from a user is input to pedal arm 140 as an input member. Clevis pin 141 is connected to pedal arm 140 and clevis 142. Clevis pin 141 and clevis 142 constitute a connecting member. Operating rod 143 as a transmitting member is connected to the connecting member via strain sensor 120 and transmits the tread load.

That is, clevis 142 and operating rod 143 are connected by strain sensor 120. The tread load input to pedal arm 140 is transmitted to operating rod 143 via strain sensor 120 by clevis 142 and clevis pin 141. Tread load Ft transmitted to operating rod 143 is transmitted to a brake system (not shown) and brake operation is performed in accordance with input tread load to brake a vehicle.

As shown in FIG. 9, mounting holes 144, 145 for mounting strain sensor 120 are provided in operating rod 143 and clevis 142, respectively. Second engagement part 126 is screwed to mounting hole 144, and first fixed part 35 is screwed to mounting hole 145.

The axial force is generated in connecting strain sensor 120 to clevis 142 and operating rod 143. Axial force f1 generated in mounting strain sensor 120 to operating rod 143 is described as one example of the axial force.

When strain sensor 120 is mounted to operating rod 143, axial force f1 in the direction of axis 34 is applied to second fixed part 37. With this, reaction force f2 is applied to receiving part 128 in contact with operating rod 143.

If reaction force f2 is directly transmitted to strain body 32, strain body 32 is deformed and the detection accuracy of strain sensor 120 is deteriorated. However, receiving part 128 is provided in strain sensor 120. Accordingly, reaction force f2 is transmitted from operating rod 143 to strain body 32 via receiving part 128.

Receiving part 128 has length L between a surface in contact with operating rod 143 and strain body 32. With this, rigidness in a transmission path in which reaction force f2 is transmitted to strain body 32 becomes higher, and strain body 32 is unlikely to be deformed. Particularly, this effect is enhanced as length L becomes larger. Thus, influence of axial force f1 generated in mounting strain sensor 120 to operating rod 143 is reduced, and the detection accuracy of strain sensor 120 is improved.

Further, by setting length L11 of gap 43 in radial direction 129 to be larger than length (diameter) L12 of receiving part 128 in radial direction 129, reaction force f2 transmitted via receiving part 128 is not directly transmitted to strain body 32. Thus, the influence of axial force f1 to strain body 32 can be reduced, and the detection accuracy of strain sensor 120 is improved. Further, by further reducing length L12, a distance between strain body 32 and receiving part 128 becomes larger and transmission of axial force f2 to strain body 32 is reduced. Thus, the influence of axial force f1 to strain body 32 can be further reduced.

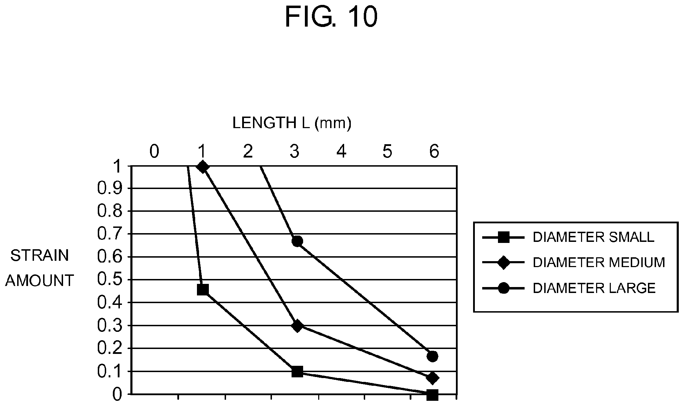

FIG. 10 shows change in magnitude of strain when force of 30 kN as axial force f1 is applied to strain sensor 120 in a case where diameter L12 of receiving part 128 is formed in 3 sizes of large, medium, and small, and length L between the surface in contact with operating rod 143 and strain body 32 is changed. Further, in strain sensor 120, a length of strain body 32 in radial direction 129 is set to 18 mm, and length L11 of gap 43 in radial direction 129 is set to 15.4 mm.

In "large" in which receiving part 128 has largest diameter L12, diameter L12 is set to 16 mm, and therefore diameter L12 is larger than length L11. In "medium" in which receiving part 128 has medium diameter L12, diameter L12 is set to 14 mm, and therefore diameter L12 is smaller than length L11. In "small" in which receiving part 128 has smallest diameter L12, diameter L12 is set to 12 mm, and therefore diameter L12 is further smaller than that in "medium".

A horizontal axis indicates length L from the contact surface of receiving part 128 in contact with operating rod 143 to strain body 32. A vertical axis indicates the magnitude of the strain generated in strain body 32 as an amount of the strain generated in strain body 32, in which the diameter of receiving part 128 is set to 14 mm ("medium") and length L is set to 1 mm, is normalized to a reference amount of 1.

As shown in FIG. 10, when the diameter of receiving part 128 is changed from "large" to "medium" and diameter L12 of receiving part 128 is set to be smaller than length L11 of gap 43 in radial direction 129, the magnitude of the strain generated in strain body 32 by axial force f1 is reduced by approximately 60%. That is, in this configuration, reaction force f2 generated by axial force f1 is unlikely to be transmitted directly to strain body 32. When the diameter of receiving part 128 is changed to "small" to be further smaller, the magnitude of the strain is reduced by approximately 60% compared to a configuration of "medium". In this way, by forming diameter L12 of receiving part 128 to be smaller than length L11 of gap 43 in radial direction 129, the influence of axial force f1 to strain body 32 can be reduced. Further, by forming diameter L12 of receiving part 128 to be further smaller, the influence of axial force f1 to strain body 32 can be further reduced.

Further, in each configuration of "large", "medium", and "small" of diameter L12 of receiving part 128, the magnitude of the strain generated in strain body 32 is reduced as length L from the surface of receiving part 128 in contact with operating rod 143 to strain body 32 becomes larger. Particularly, in a case where the diameter of receiving part 128 is set to "small" and length L is set to 6 mm, the magnitude of the strain becomes approximately 0. In this way, when length L of receiving part 128 is set to be larger, the rigidness of the transmitting path from a position where axial force f1 is applied to strain body 32 becomes higher, and therefore the influence of axial force f1 to strain body 32 can be reduced.

Further, in load detector 139, a screw hole as mounting hole 145 is formed in clevis 142, and first fixed part 35 is fixed to clevis 142 by a screw, and therefore the influence of the axial force generated when clevis 142 is fastened to strain sensor 120 is reduced by nut 146. In this way, nut 146 receives axial force f1 at a position away from strain body 32. Thus, the influence of axial force f1 to strain body 32 can be reduced. Further, by using nut 146, a distance between clevis 142 and strain body 32 can be freely adjusted and a size of load detector 139 can be adjusted. Accordingly, load detector 139 can be adopted to a brake system of various kinds of vehicles.

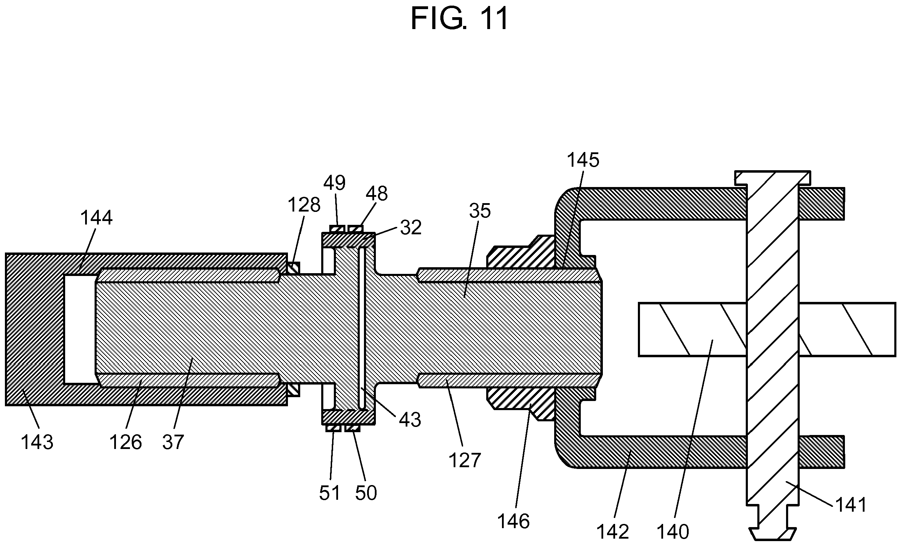

Further, receiving part 128 may be provided at a position away from strain body 32 as shown in FIG. 11. FIG. 11 is a cross-sectional view of a load detector including another strain sensor according to the present exemplary embodiment.

By providing receiving part 128 at the position away from strain body 32, the influence of axial force f1 to strain body 32 can be remarkably reduced. Further, by providing receiving part 128 at the position away from strain body 32, a region having a length in radial direction 129 being smaller than receiving part 128 is formed between receiving part 128 and strain body 32. Thus, the influence of axial force f1 to strain body 32 can be further reduced.

Further, by providing receiving part 128 onto second fixed part 37 by welding or the like, a position of receiving part 128 is easily adjusted. Thus, this configuration is easily adopted to various brake systems.

Further, in a case where receiving part 128 is provided at the position away from strain body 32, receiving part 128 is not provided on the whole surface of an outer periphery of strain body 32 but, for example, receiving part 128 may be provided as a projection protruding from second fixed part 37. At this time, if only one receiving part 128 is provided, reaction force f2 is applied to only one receiving part 128, and therefore axial force f1 is not transmitted to strain body 32 with a good balance. Thus, the amount of the strain generated by axial force f1 is concentrated to some part in accordance with the position of strain body 32. Thus, by providing a plurality of receiving parts 128 instead of providing only one receiving part 128, axial force f1 is received by receiving part 128 with a good balance. Accordingly, the detection accuracy of strain sensor 120 is further improved. On the other hand, by providing receiving part 128 so as to surround the outer periphery of second fixed part 37 instead of providing a plurality of receiving parts 128, axial force f1 can be received by the whole part of receiving part 128. Thus, the detection accuracy of strain sensor 120 is further improved.

Further, in the present exemplary embodiment, load detector 139 for the brake system is described, however, load detector 139 may be formed to detect load applied in the direction of axis 34 from first fixed part 35. That is, for example, load detector 139 may be adopted to a device which detects load applied to a seat for a vehicle. Further, by using strain sensor 31 according to the first exemplary embodiment instead of strain sensor 120, a similar effect can be obtained.

### THIRD EXEMPLARY EMBODIMENT

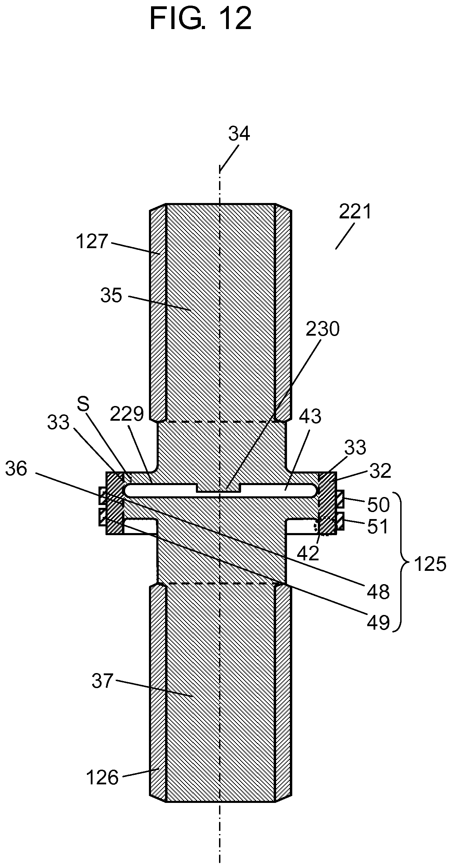

FIG. 12 is a side cross-sectional view of strain sensor 221 according to a third exemplary embodiment of the present invention. Strain sensor 221 includes strain body 32, first fixed part 35, second fixed part 37, and first strain resistance pattern 48 to fourth strain resistance pattern 51. First strain resistance pattern 48 to fourth strain resistance pattern 51 are similar to those in the first and the second exemplary embodiments, and constitute strain detection element 125 shown in FIG. 2. First fixed part 35 is connected to an inside of strain body 32 at first connection part 33 and extends from an opening of a first end of strain body 32 in the direction of axis 34. Second fixed part 37 is connected to an inside of strain body 32 at second connection part 36 and extends from an opening of a second end of strain body 32 in a direction opposite to first fixed part 35 with a gap 43 interposed between strain body 32 and second fixed part 37. Further, first fixed part 35 has first engagement part 127 to be fixed to an object to be detected (not shown), and second fixed part 37 has second engagement part 126 to be fixed to the object to be detected. Strain detection element 125 is provided on an outer peripheral surface of strain body 32. A configuration described above is similar to that of strain sensor 31 according to the first exemplary embodiment. In strain sensor 221, cylindrical stopper 230 is provided on surface 229 of first fixed part 35 facing gap 43, and this configuration is different from strain sensor 31.

A configuration of strain detection element 125 has been described with reference to FIGS. 2 and 3 in the first exemplary embodiment, and a description thereof is therefore omitted. Further, the same configuration as that in the first exemplary embodiment can be formed in a similar way. Stopper 230 may be joined to be integral with first fixed part 35 by welding, or alternatively may be formed by processing a member made of the same material.

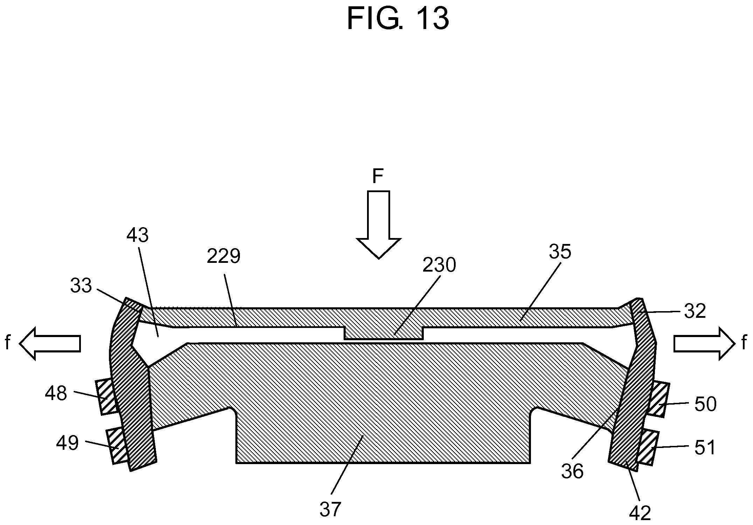

Hereinafter, operation of strain sensor 221 is described. FIG. 13 is an enlarged view of a part of strain sensor 221 showing deformation of strain sensor 221 when load is applied to strain body 32.

Load pushing strain body 32 in the direction of axis 34 is applied to strain sensor 221 connected to the object to be detected via first fixed part 35 or second fixed part 37. Strain body 32 is deformed by this load.

When load F is applied to strain body 32 from the object to be detected via first fixed part 35 or second fixed part 37, shearing load f is applied to first fixed part 35. A moment is generated on an outer surface of strain body 32 due to shearing load f, and tension stress is applied to strain body 32 between first connection part 33 and second connection part 36. Strain body 32 is deformed such that a portion between first connection part 33 and second connection part 36 is deformed to be displaced toward an outside, and extension part 42 is displaced toward an inside. Extension part 42, similar to that in the first exemplary embodiment, extends from strain body 32 toward second fixed part 37 to be parallel to the direction of axis 34.

As strain body 32 is deformed in this way, when the load is applied to first fixed part 35, compression stress is applied to first strain resistance pattern 48 and third strain resistance pattern 50, and tension stress is applied to second strain resistance pattern 49 and fourth strain resistance pattern 51. When the stress is applied, each resistance of first strain resistance pattern 48 and third strain resistance pattern 50 becomes larger, and each resistance of second strain resistance pattern 49 and fourth strain resistance pattern 51 becomes smaller. With this, a potential difference is generated between first output electrode 44 and second output electrode 45 shown in FIGS. 2 and 3, and by subjecting the potential difference to signal processing in the processing circuit, an output signal corresponding to detection load can be generated. That is, an operation principle of strain sensor 221 is similar to that of strain sensor 31.

As described above, when strain body 32 is deformed as shown in FIG. 13, large force is applied to first connection part 33 which is a boundary between strain body 32 and first fixed part 35. In a case where load F is excessively large, strain body 32 and first fixed part 35 may be fractured at first connection part 33.

However, in strain sensor 221, stopper 230 is provided in first fixed part 35. Thus, even if excessive load F is applied to strain sensor 221 and strain body 32 is deformed remarkably, stopper 230 is brought into contact with second fixed part 37 and prevents deformation of strain body 32. As a result, strain body 32 cannot be deformed beyond its durability. In this way, since magnitude of deformation of strain body 32 is limited, strain body 32 is prevented from being fractured under large load F, and therefore the durability of strain sensor 221 can be improved.

Further, when load within a normal usage range is applied, stopper 230 is away from second fixed part 37. Thus, in a normal usage, stopper 230 does not interrupt the deformation of strain body 32, and therefore strain body 32 can be deformed sufficiently. With this, the durability of strain sensor 221 can be improved without deteriorating the detection accuracy of strain sensor 221.

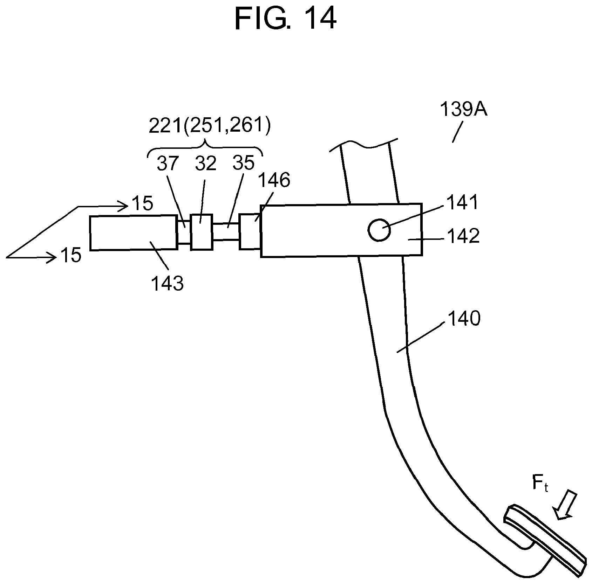

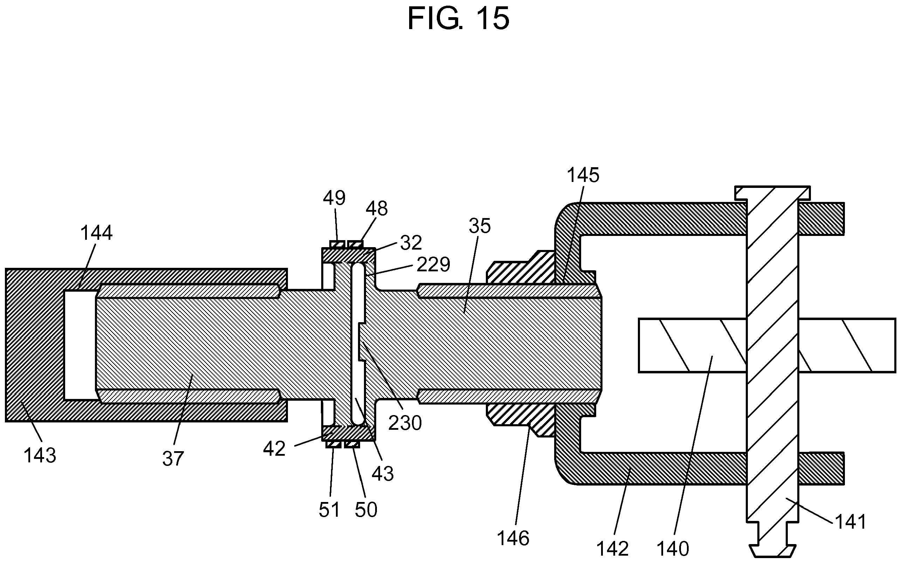

FIG. 14 shows a configuration of load detector 139A including strain sensor 221, and FIG. 15 is a cross-sectional view taken along line 15-15 of load detector 139A shown in FIG. 14. That is, load detector 139A has strain sensor 221 instead of strain sensor 120, compared to load detector 139 according to the second exemplary embodiment.

Strain sensor 221 mounted to load detector 139A transmits tread force Ft, which is applied to pedal arm 140 by a user, to operating rod 143. Further, even if tread force Ft is applied to pedal arm 140 based on over-assumed force by a user, a deformation amount of strain body 32 is limited by stopper 230. Thus, a fracture of first connection part 33 which is a boundary between strain body 32 and first fixed part 35 can be prevented. As a result, failure of strain sensor 221 due to the fracture of first connection part 33 can be prevented when a user drives a vehicle, and therefore a user can operate the brake at any time and safety of the vehicle can be improved.

Further, in the present exemplary embodiment, examples of a shape of stopper 230 include a conical shape, a semi-spherical shape, and the like other than a cylindrical shape. Further, appropriate size of stopper 230 or a width in the radial direction of stopper 230 may be determined based on the length of gap 43 in the direction of axis 34, usage of stopper 230, or a cross-sectional area of first connection part 33. Further, in the present exemplary embodiment, only one stopper 230 is provided, however a plurality of stoppers 230 may be provided. By providing a plurality of stoppers 230, for example, in a usage circumstance in which load in a direction other than the axial direction is applied to first fixed part 35 and eccentric load is applied to strain body 32, a plurality of stoppers 230 can be disposed in accordance with the usage circumstance. Thus, the durability can be further improved.

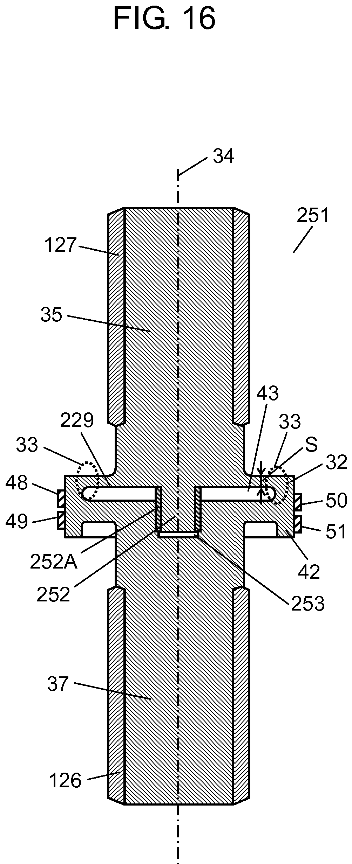

Next, other strain sensor 251 according to the present exemplary embodiment is described with reference to FIG. 16. FIG. 16 is a side cross-sectional view of strain sensor 251.

In strain sensor 251, stopper 252 is provided on surface 229 of first fixed part 35 facing gap 43 instead of stopper 230, and this configuration is different from strain sensor 221. Further, stopper 252 has screw part 252A connected to screw hole 253 formed in second fixed part 37.

With the configuration described above, in strain sensor 251, deformation of strain body 32 is limited compared to strain sensor 221. Thus, the durability of strain body 32 is further improved.

It is preferable that a sum of a cross-sectional area (minimum cross-sectional area) of narrowest portion S of a connection part between strain body 32 and first fixed part 35 and an effective cross-sectional area of stopper 252 is larger than an effective cross-sectional area of first engagement part 127 of first fixed part 35. Note that the effective cross-sectional area is obtained based on an effective diameter of a screw in a screw structure.

When the load is applied in the direction of axis 34, force is equally applied to first connection part 33 and stopper 252. At this time, if the sum of the cross-sectional area of narrowest portion S and the effective cross-sectional area of stopper 252 is larger than the effective cross-sectional area of first fixed part 35, first fixed part 35 is fractured before strain body 32 when excessive load is applied. That is, the durability of strain body 32 against load can be made higher than that of first fixed part 35. Thus, the durability of strain sensor 221 can be further improved.

Stopper 252 is mounted to second fixed part 37 by a screw. However, the stopper 252 is movable within a gap between a screw hole of second fixed part 37 and stopper 252. Thus, the strain can be detected without preventing the deformation of strain body 32.

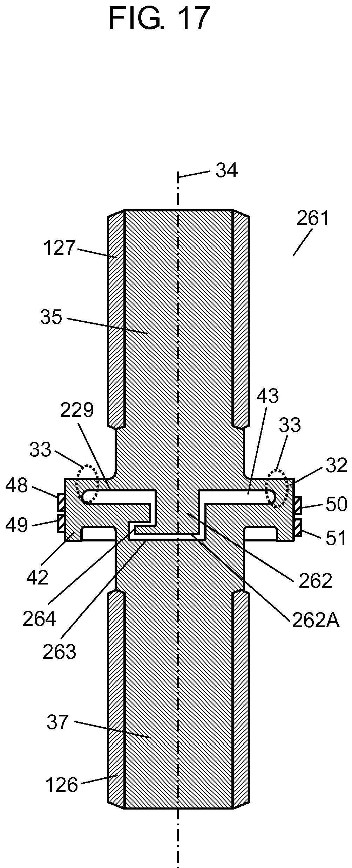

Next, another strain sensor 261 according to the present exemplary embodiment is described with reference to FIG. 17. FIG. 17 is a side cross-sectional view of strain sensor 261.

In strain sensor 251, stopper 262 is provided on surface 229 of first fixed part 35 facing gap 43 instead of stopper 230, and this configuration is different from strain sensor 221. Further, stopper 262 is inserted into hole part 263 formed in second fixed part 37. Extension part 264 extending from distal end 262A in a direction different from a direction (direction of axis 34) in which stopper 262 extends is provided in stopper 262. Distal end 262A corresponds to an end part of stopper 262 which is the farthest from first engagement part 127 in the direction in which axis 34 extends.

When excessive load is applied to strain sensor 261, stopper 262 is brought into contact with a bottom surface of second fixed part 37. Thus, similar to stopper 230, stopper 262 can limit the magnitude of deformation of strain body 32. Accordingly, the durability of strain sensor 261 is improved. Further, since distal end 262A of stopper 262 and the bottom surface of second fixed part 37 are away from each other, when the load is applied to strain sensor 261, strain body 32 can be deformed sufficiently. Thus, the durability of strain sensor 261 is improved without deteriorating the detection accuracy.

Further, since extension part 264 is provided in stopper 262, even if first connection part 33 is fractured and strain body 32 and first fixed part 35 are separated from each other for some reason, extension part 264 is brought into contact with second fixed part 37. Thus, first fixed part 35 and second fixed part 37 can be prevented from being separated from each other.

As described above, not only the durability of strain sensor 261 is improved, but also the separation is prevented when strain sensor 261 is fractured. Thus, a function as a transmitting member for load can be achieved. Accordingly, by adopting strain sensor 261 to load detector 139A shown in FIG. 14, even if strain sensor 261 is fractured and a function as a sensor is lost, the tread force can be transmitted from clevis 142 to operating rod 143. Thus, reliability of load detector 139A is improved.

Further, stopper 262 and extension part 264 may be joined integrally by welding, or alternatively may be formed by processing a member made of the same material.

### INDUSTRIAL APPLICABILITY

The strain sensor according to the present invention can reduce the influence of the axial force generated when the strain sensor is mounted to the object to be detected, and improve the detection accuracy of strain sensor. Therefore, the strain sensor is useful for detecting the tread load applied to the pedal of vehicles, for detecting tension force of a cable in a parking brake system for vehicles, and for detecting load on a seat for vehicles.

### REFERENCE MARKS IN THE DRAWINGS

- 31, 120, 221, 251, 261: strain sensor
- 32: strain body
- 33: first connection part
- 34: axis
- 35: first fixed part
- 36: second connection part
- 37: second fixed part
- 38: first surface
- 39: first thick part
- 40: second surface
- 41: second thick part
- 42: extension part
- 43: gap
- 44: first output electrode
- 45: second output electrode
- 46: power source electrode
- 47: ground electrode
- 48: first strain resistance pattern (pattern)
- 49: second strain resistance pattern (pattern)
- 50: third strain resistance pattern (pattern)
- 51: fourth strain resistance pattern (pattern)
- 125: strain detection element
- 126: second engagement part
- 127: first engagement part
- 128: receiving part
- 129: radial direction
- 139, 139A: load detector
- 140: pedal arm
- 141: clevis pin
- 142: clevis
- 143: operating rod
- 144, 145: mounting hole
- 146: nut
- 229: surface
- 230, 252, 262: stopper
- 252A: screw part
- 253: screw hole
- 262A: distal end
- 263: hole part
- 264: extension part

## Claims

1. A strain sensor comprising:
a cylindrical strain body extending in an axial direction;
a first fixed part connected to the strain body at a first connection part and extending from an opening of a first end of the strain body in the axial direction, the first fixed part including a first engagement part to be fixed to an object to be detected;
a second fixed part connected to the strain body at a second connection part and extending from an opening of a second end of the strain body in a direction opposite to the first fixed part with a gap interposed between the strain body and the second fixed part, the second fixed part including a second engagement part to be fixed to the object to be detected; and
a strain detection element provided on an outer peripheral surface of the strain body,
wherein the strain detection element is disposed such that a center of the strain detection element is closer to the second fixed part than a center of the gap in the axial direction.

2. The strain sensor according to claim 1, wherein the center of the strain detection element is provided at a position close to the gap in the second connection part in the axial direction.

3. The strain sensor according to claim 1, further comprising a circuit pattern including a first output electrode, a second output electrode, a power source electrode, and a ground electrode,
wherein the strain detection element includes:
a first strain detection element connecting the power source electrode and the first output electrode;
a second strain detection element connecting the ground electrode and the first output electrode;
a third strain detection element connecting the power source electrode and the second output electrode; and
a fourth strain detection element connecting the ground electrode and the second output electrode.

4. The strain sensor according to claim 3, wherein the first strain detection element and the third strain detection element are provided close to the gap in the second connection part in the axial direction, and
the second strain detection element and the fourth strain detection element are provided at a side opposite to the gap in the second connection part in the axial direction.

5. The strain sensor according to claim 3, wherein the strain body includes an extension part extending from the second connection part in a same direction in which the second fixed part extends,
the first strain detection element and the third strain detection element are provided close to the gap in the second connection part in the axial direction, and
the second strain detection element and the fourth strain detection element are provided close to the extension part in the second connection part in the axial direction or on the extension part in the second connection part.

6. The strain sensor according to claim 1, wherein the first fixed part includes a first thick part between the first connection part and the first engagement part and protrudes in a direction orthogonal to the axial direction, and
the second fixed part includes a second thick part between the second connection part and the second engagement part and protrudes in the direction orthogonal to the axial direction.

7. The strain sensor according to claim 1, wherein the second fixed part includes a receiving part between the first connection part and the first engagement part and configured to receive force applied from the object to be detected.

8. The strain sensor according to claim 7, wherein a length of the receiving part in a radial direction of the strain body is smaller than a length of the gap in the radial direction.

9. The strain sensor according to claim 7, wherein a plurality of the receiving parts are provided in the second fixed part.

10. The strain sensor according to claim 7, wherein the receiving part is provided to surround an outer periphery of the second fixed part.

11. The strain sensor according to claim 1, wherein the first fixed part includes a stopper on a surface facing the gap.

12. The strain sensor according to claim 11, wherein
the second fixed part includes a screw hole, and
the stopper includes a screw part connected to the screw hole.

13. The strain sensor according to claim 12, wherein a sum of a minimum cross-sectional area of a connection part between the strain body and the first fixed part and an effective cross-sectional area of the stopper is larger than an effective cross-sectional area of the first fixed part.

14. The strain sensor according to claim 11, wherein the stopper includes an extension part extending in a direction different from the axial direction.

15. The strain sensor according to claim 11, wherein a plurality of the stoppers are provided in the first fixed part.

16. A load detector comprising:
an input member to which an input load is applied;
a connecting member connected to the input member;
the strain sensor according to claim 1 connected to the connecting member at the first connection part; and
a transmitting member connected to the second connection part of the strain sensor according to claim 1 and configured to transmit the input load.

17. The load detector according to claim 16, further comprising a nut which fixes the connecting member and the first connection part of the strain sensor.
